**Europäisches Patentamt**

**European Patent Office**

**Office européen des brevets**

(19)

(11) Numéro de publication : **0 497 674 A1**

# (12) DEMANDE DE BREVET EUROPEEN

(21) Numéro de dépôt : **92400199.3**

(22) Date de dépôt : **27.01.92**

(51) Int. Cl.⁵ : **B29C 47/90, B29C 47/88**

(30) Priorité : **28.01.91 FR 9100909**

(43) Date de publication de la demande :
**05.08.92 Bulletin 92/32**

(84) Etats contractants désignés :
**AT BE CH DE DK ES GB GR IT LI LU MC NL PT SE**

(71) Demandeur : **EROPOL FINANCE ET DEVELOPPEMENT**
**Z.I. de la Grosse Pierre, 6, rue du Bout Large**
**F-78540 Vernouillet (FR)**

(72) Inventeur : **Figuereo, Blaise François**
**344, rue Paul Doumer**
**F-78510 Triel-sur-Seine (FR)**

(74) Mandataire : **Lordonnois, Michel**
**B.P. 4**
**F-91230 Montgeron (FR)**

(54) **Dispositif de conformation d'un produit extrudé à l'état pâteux.**

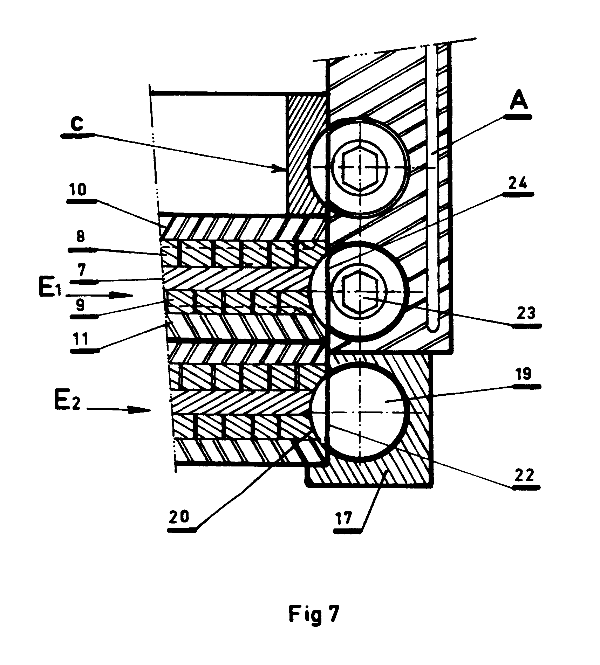

(57) Ce dispositif de conformation, adapté pour faire subir au produit extrudé linéairement une opération de refroidissement en continu ou une opération de vulcanisation à chaud pendant sa conformation est sous forme d'un tunnel (1) dont l'enveloppe extérieure incorpore des canalisations internes (A) ne débouchant pas à l'intérieur de cette enveloppe et circulant un liquide ou fluide à température déterminée en fonction de l'opération choisie de refroidissement ou de vulcanisation, lequel tunnel comporte intérieurement, montés en position verticale, plusieurs éléments de conformation (figure 6) accolés les uns aux autres, chaque élément de conformation, sous forme de plaque stratifiée monobloc, comportant un passage transversal central calibré de conformation du produit extrudé et en cours d'extrusion, ainsi qu'un premier réseau rayonnant (9) d'introduction de fluide gazeux, à température déterminée suivant ladite opération choisie, provenant de canalisations (B) de distribution de fluide gazeux sous pression internes à l'enveloppe, en direction du passage central et sur l'extérieur du produit extrudé en cours de glissement dans ce passage, de même qu'un second réseau rayonnant d'aspiration (8) du fluide gazeux utilisé depuis le passage central en direction de canalisations (C) d'aspiration internes à l'enveloppe.

Fig 1

EP 0 497 674 A1

Fig 6

La présente invention se rapporte à un dispositif de conformation d'un produit extrudé à l'état pâteux. Plus particulièrement, elle concerne un tel dispositif adapté à la sortie d'une extrudeuse pour permettre l'engagement en glissement linéaire en phase pâteuse d'un produit extrudé et pour faire subir à celui-ci pendant sa conformation à la section calibrée demandée une opération de refroidissement, ou une opération de vulcanisation à chaud, de même qu'un lissage superficiel externe afin d'amenuiser au maximum le frottement superficiel du produit à l'intérieur du passage calibré à (a section demandée et, par ailleurs, pour éviter tout problème de collage du produit pendant sa phase pâteuse sur la paroi intérieure du passage calibré.

Dans la technique actuellement utilisée pour produire des extrudats tels que par exemple des profilés à partir de matières plastiques du type des plastomères, il est nécessaire, sitôt après l'opération d'extrusion, de figer la section du profilé au cours de la gélification afin d'obtenir la section calibrée demandée. Pour ce faire, actuellement on utilise des dispositifs de conformation, constitués en un seul bloc, adaptés pour consommer les calories nécessaires à la mise en viscosité de la matière première et qui permettent l'utilisation de vide pour faire plaquer l'extérieur du profilé extrudé sur la paroi intérieure du passage interne du bloc de conformation calibré à la section demandée pour le profilé. Cette opération de refroidissement et de conformation du profilé est réalisée pendant l'opération d'extrusion en continu et certains problèmes de "collage" dans le passage calibré du profilé, alors qu'il est en phase pâteuse, surviennent fréquemment et constituent les inconvénients majeurs d'une telle conformation de produit extrudé en phase de refroidissement.

La présente invention a pour but de fournir un dispositif de conformation pour produits extrudés linéairement qui permet d'éliminer la majeure partie des inconvénients précités des dispositifs monolithiques connus à ce jour et dont le passage interne de conformation du produit à la section calibrée demandée peut être adapté à la demande à la longueur désirée par adjonction d'éléments individuels de conformation accolés les uns à la suite des autres et adaptés chacun pour permettre une introduction d'un fluide gazeux, à température déterminée suivant l'opération choisie de refroidissement ou de vulcanisation, en direction et sur l'extérieur du produit extrudé à conformer, ainsi qu'une aspiration, en direction de la périphérie de l'élément, du fluide gazeux ayant passé autour de ce produit, cette circulation de fluide produisant dans chaque élément, entre la surface externe du produit et la paroi interne du passage de conformation, une lame de fluide s'écoulant au long du produit dans le sens de l'extrusion et, par conséquent, empêchant le produit de coller et diminuant son frottement sur la paroi interne du passage tout en aidant à son lissage et en favorisant son glissement vers la sortie du dispositif.

Ainsi, selon la présente invention, ce dispositif de conformation situé en sortie d'extrudeuse et adapté pour faire subir au produit extrudé linéairement une opération de refroidissement en continu ou une opération de vulcanisation à chaud pendant sa conformation est remarquable par le fait qu'il est constitué sous forme d'un tunnel dont l'enveloppe extérieure incorpore des canalisations internes ne débouchant pas à l'intérieur de cette enveloppe et circulant un liquide ou fluide à température déterminée en fonction de l'opération choisie de refroidissement ou de vulcanisation, lequel tunnel comporte intérieurement, montés en position verticale, plusieurs éléments de conformation accolés les uns aux autres, chaque élément de conformation, sous forme de plaque stratifiée monobloc, comportant un passage transversal central calibré de conformation du produit extrudé et en cours d'extrusion, ainsi qu'un premier réseau rayonnant d'introduction de fluide gazeux, à température déterminée suivant ladite opération choisie, provenant de canalisations de distribution de fluide gazeux sous pression internes à l'enveloppe, en direction du passage central et sur l'extérieur du produit extrudé en cours de glissement dans ce passage, de même qu'un second réseau rayonnant d'aspiration du fluide gazeux utilisé depuis le passage central en direction de canalisations d'aspiration internes à l'enveloppe dans laquelle ces canalisations d'aspiration, les canalisations de distribution et les canalisations de circulation de liquide ou de fluide n'ont aucune liaison entre elles.

De manière plus spécifique et selon l'invention, chaque élément de conformation, sous forme de plaque stratifiée monobloc et avant que l'on ne pratique la découpe du passage central de conformation, est constituée d'une plaque centrale pleine, encadrée sur chacune de ses deux faces par une plaque comportant un réseau rayonnant de circulation de fluide gazeux sous forme de fentes radiales prenant naissance au centre de cette plaque et débouchant dans un canal périphérique prévu en retrait du bord extérieur de cette plaque et communiquant pour l'une des plaques aux canalisations de distribution de fluide gazeux sous pression et, pour l'autre plaque, aux canalisations d'aspiration, chacune de ces deux plaques à réseau rayonnant ayant, plaquée sur sa face extérieure, une plaque d'étanchéité des fentes radiales de son réseau rayonnant et de son canal périphérique, chaque plaque d'étanchéité comportant, pratiqués dans ses bords supérieur et inférieur, plusieurs orifices mettant en communication le canal périphérique de la plaque à réseau, sur laquelle elle est plaquée, avec les buses de liaison aux canalisations correspondantes internes à l'enveloppe.

Par ailleurs, selon l'invention, les fentes radiales des deux plaques à réseau rayonnant de circulation d'air sont distribuées suivant un pas angulaire identique et constant, mais toutefois avec un décalage d'un demi-pas d'une plaque à l'autre, afin que le fluide gazeux pénétrant dans les fentes de la plaque de distribution ait une circulation en épi en direction des fentes d'aspiration de l'autre plaque et qu'il forme une lame de fluide gazeux entre la plaque centrale et la surface extérieure du produit extrudé, cette circulation en épi se produisant dans le même sens que celui du défilement de ce produit.

A noter que, dans un mode de réalisation, la plaque centrale de chaque élément de conformation, formant plaque d'étanchéité entre les deux plaques à réseau rayonnant, est constituée de préférence en acier doux, les deux plaques à réseau rayonnant sont constituées en bronze, en laiton ou en matière plastique dure telle que, par exemple, du Delrin®, et les deux plaques extérieures d'étanchéité sont constituées en aluminium, de préférence du type AU4G. En outre, chaque élément de conformation, sous forme de plaque stratifiée, est prévu, après avoir pratiqué le passage de conformation calibré dans sa partie centrale, découpé au moins par moitié en deux parties et, au besoin, quadrangulairement en quatre parties suivant la configuration de la section du produit extrudé afin de permettre l'engagement de chaque partie autour de ce produit en cours d'extrusion à l'état pâteux et de reformer un élément de conformation monobloc enserrant ce produit en cours de défilement.

Par ailleurs, selon la présente invention, ce dispositif de conformation d'un produit extrudé est pourvu d'un dispositif de chargement et de positionnement, de chacune des plaques stratifiées constituant chaque élément de conformation, à l'intérieur de l'enveloppe, ce dispositif étant constitué par un berceau de support mobile dont la forme correspond à la forme extérieure de chaque élément et qui est adapté pour permettre l'assemblage des parties découpées de chaque élément autour du produit extrudé en phase pâteuse, son déplacement en position assemblée en direction de l'entrée du tunnel située en regard de la filière de sortie de la tête d'extrusion et son engagement partiel dans un plan vertical dans cette entrée, ce berceau étant adapté pour libérer cet élément partiellement engagé lorsqu'il est commandé pour revenir en position initiale en vue de l'assemblage, en lui, de l'élément de conformation suivant, lequel poussera dans le tunnel l'élément précédent lorsqu'il sera à son tour engagé partiellement dans l'entrée du tunnel.

A noter que, selon l'invention, le berceau de support mobile d'assemblage et d'engagement partiel de chaque élément de conformation dans le tunnel est pourvu latéralement de broches ou d'aimants escamotables adaptés pour agir sur la plaque centrale en acier par l'intermédiaire de gorges pratiquées verticalement dans les bords latéraux correspondants de chaque élément, gorges qui sont également adaptée pour permettre l'introduction de broches à méplat de positionnement et d'immobilisation de chaque élément à l'intérieur du tunnel.

En outre, selon l'invention et dans un mode de réalisation, pour faciliter la mise en place des éléments de conformation successifs, la partie supérieure, ou de plafond, de l'enveloppe du tunnel est prévue sous forme d'un couvercle, mobile sur articulations, comportant une nappe de canalisations de circulation de liquide ou de fluide à ladite température déterminée, ainsi que des canalisations d'introduction de fluide gazeux à ladite température déterminée dans chacun des éléments, et des canalisations d'aspiration du fluide gazeux utilisé depuis chacun de ces éléments. D'autre part, pour maintenir fermement assemblé autour du produit extrudé chaque élément de conformation au cours de son transport vers l'entrée du tunnel par le berceau de support mobile, celui-ci est pourvu d'une partie de couvercle supérieur articulé sur un côté latéral et verrouillé à la demande sur l'autre côté opposé.

A noter qu'avant de commencer l'introduction des éléments de conformation dans le tunnel, celui-ci est rempli de cadres situés en lieu et place des futurs éléments de conformation et conçus pour boucher les buses d'introduction et d'aspiration de fluide gazeux, lesquelles buses seront mises en communication avec chaque élément de conformation introduit dans le tunnel et repoussant les cadres précédents qui seront dégagés un à un en sortie de tunnel au fur et à mesure du remplissage de ce dernier en éléments de conformation suivant un nombre déterminé.

Par ailleurs, pour faciliter sa mise en place à la sortie d'une extrudeuse, ce dispositif de conformation, pourvu de son berceau mobile, est monté sur une table de support mobile et réglable en hauteur et en position dans l'axe de la tête d'extrusion, le berceau mobile étant adapté pour s'escamoter lorsque le tunnel est pourvu du nombre déterminé d'éléments pour obtenir une conformation convenable et pour pouvoir rapprocher ce tunnel jusqu'à toucher la face de sortie de la filière de la tête d'extrusion. Au cas où un seul tunnel serait insuffisant pour obtenir une bonne conformation du produit extrudé, il est possible d'en installer un second dans son prolongement.

A noter également que, pendant le remplissage du tunnel en éléments de conformation provoquant le dégagement simultané des cadres de bouchage des orifices d'introduction et d'aspiration de fluide gazeux, les canalisations internes au couvercle ne sont pas alimentées tout le temps que ce dernier est en position ouverte.

En outre, à titre documentaire et sans sortir du cadre de la présente invention, on peut signaler que les éléments de conformation peuvent être de section rectangulaire ou carrée, l'enveloppe du tunnel ayant une forme intérieure correspondante. Par ailleurs, ces éléments de conformation peuvent comporter deux réseaux rayonnants jumelés latéralement et être adaptés pour desservir deux têtes d'extrusion jumelées, ces éléments étant rangés et positionnés dans une unique enveloppe de tunnel pour loger les diverse canalisations internes.

D'autre part, on peut prévoir, sans sortir du cadre de la présente invention, des éléments de conformation de section circulaire découpée en deux moitiés ou en quatre parties quadrangulaires, l'enveloppe du tunnel étant, dans ce cas, constituée par un manchon cylindrique formé de deux parties semi-cylindriques dont l'une serait la moitié inférieure, avec une semelle de base, et l'autre la moitié supérieure de couvercle articulé, le berceau mobile ayant lui-même une forme semi-cylindrique de support ainsi qu'une forme identique de couvercle.

D'autres caractéristiques de la présente invention apparaîtront de la description suivante d'un mode de réalisation du dispositif de conformation d'un produit extrudé, donné à titre d'exemple non limitatif, et représenté schématiquement dans les dessins ci-joints, dans lesquels:

– La figure 1 est une vue schématique en perspective du tunnel, à l'état vide, du dispositif conforme à l'invention;

– La figure 2 est une vue schématique en persepctive d'un élément de conformation alors que le passage de conformation central n'est pas encore découpé;

– La figure 3 est une vue en coupe partielle dans l'angle III du tunnel selon la figure 1;

– La figure 4 est une vue en coupe partielle verticale prise suivant la ligne IV-IV de la figure 2;

– La figure 5 est une vue de face suivant la flèche F de la figure 2, montrant l'un des réseaux rayonnants de l'élément de conformation représenté sur cette figure alors que la plaque extérieure d'étanchéité est supprimée;

– La figure 6 est une vue de face de l'élément de conformation de la figure 2 lorsque l'on a découpé son passage de conformation à la section du produit extrudé et qu'il a été ensuite coupé en quatre pièces suivant les axes I-I, II-II;

– La figure 7 est une vue en plan et en coupe partielle, prise dans l'angle de droite de l'entrée du tunnel, lorsque l'on regarde cette entrée et que les éléments de conformation sont en cours d'engagement dans le tunnel en repoussant les cadres précédents de bouchage des orifices d'introduction et d'aspiration de fluide gazeux.

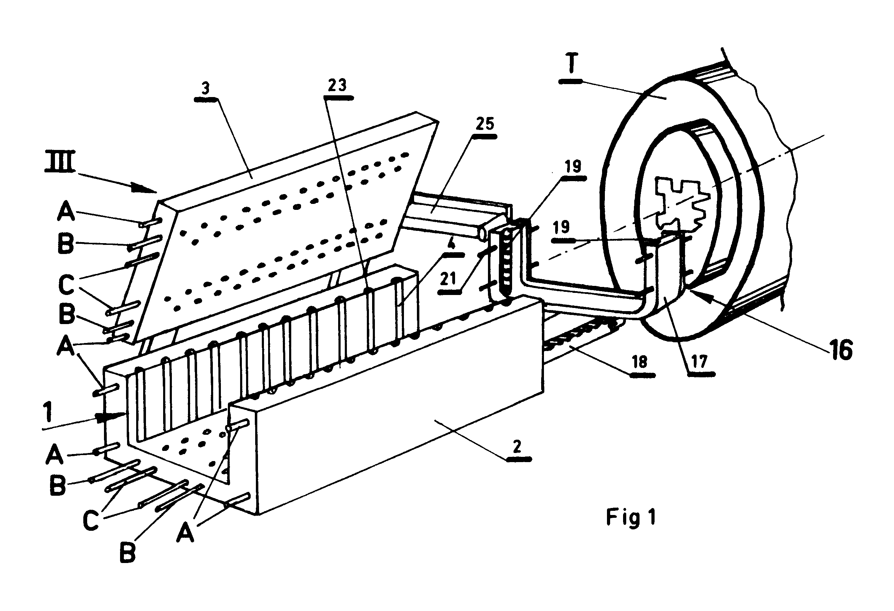

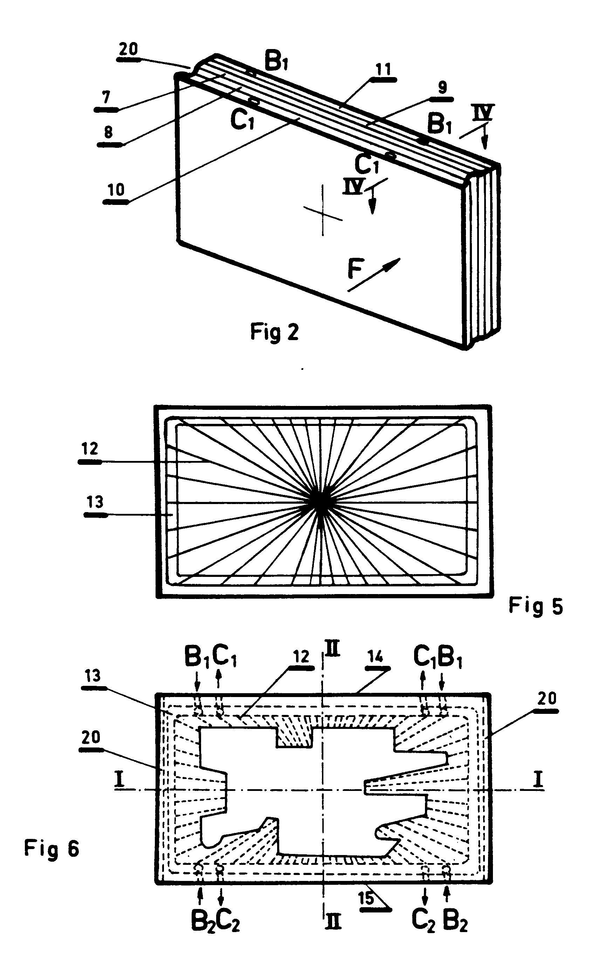

Comme on le remarque dans ces figures, et en particulier dans les figures 1, 2, 3 et 6, le dispositif de conformation conforme à la présente invention, et selon un mode de réalisation, est constitué par un tunnel (1), dont l'enveloppe comporte une partie de base (2), de forme en U, et une partie articulée de couvercle (3), et est adaptée pour recevoir intérieurement, accolés les uns aux autres en position verticale, plusieurs éléments de conformation du type montré dans la figure 2 mais, bien entendu, pourvus d'un passage de conformation central tel que celui représenté, à titre d'exemple, dans la figure 6 dont la section est calibrée à celle d'un produit extrudé sortant en continu de la filière située à la sortie de la tête d'extrusion (T) et devant être conformé en cours de refroidissement. A noter qu'aucun élément n'a été représenté dans la figure 1 à l'intérieur de l'enveloppe du tunnel pour faciliter la compréhension, la position des éléments correspondant aux gorges verticales 4 adaptée pour recevoir une broche pivotante d'immobilisation d'élément comme on le décrira par la suite en relation avec la figure 7.

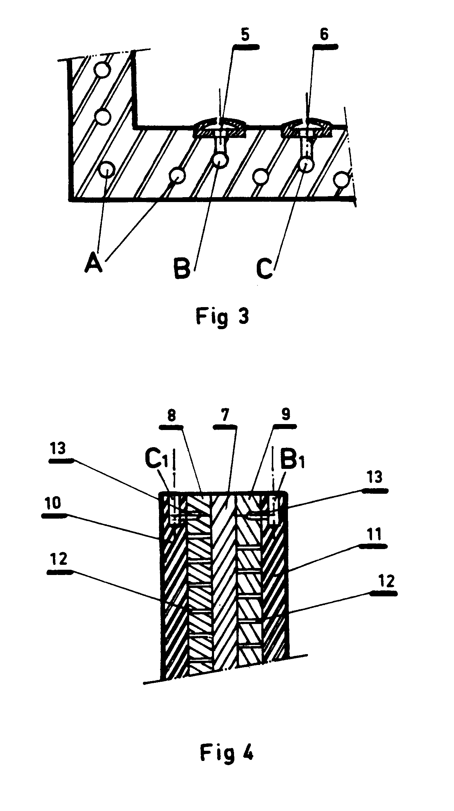

Comme on le voit au mieux dans les figures 1 et 3, la partie de base (2), y compris ses parois latérales ainsi que la partie de couvercle (3), sont mises à température choisie au moyen d'un fluide ou d'un liquide à température déterminée circulant dans des canalisations (A) que ces parties (2, 3) incorporent, ainsi que des canalisations (B) circulant un fluide gazeux sous pression et des canalisations (C) d'aspiration de ce fluide gazeux lorsqu'il a été utilisé.

On doit noter que ces trois sortes de canalisations n'ont aucune liaison entre elles et que seules les canalisations (B) et (C) débouchent dans l'intérieur du tunnel par l'intermédiaire de buses respectives, référencées (5) pour les canalisations (B) et (6) pour les canalisations (C), garnies chacune d'un joint d'étanchéité (figure 3) pour alimenter respectivement en fluide gazeux chaque élément de conformation fixé dans le tunnel et aspirer le fluide gazeux utilisé provenant de chaque élément de conformation que nous décrivons ci-après en relation avec les figures 2, 4, 5 et 6.

En effet, chaque élément de conformation est sous forme d'une plaque stratifiée monobloc (figure 2) qui comprend, accolées les unes aux autres et fixées entre elles par soudage, collage ou mécaniquement, une plaque centrale (7), encadrée sur chacune de ses deux faces par une plaque (8, 9) comportant un réseau rayonnant de circulation d'air, et ayant chacune, plaquée sur sa face extérieure, une plaque externe d'étanchéité (10, 11) du réseau rayonnant correspondant, la plaque centrale (7) servant également de plaque interne d'étanchéité pour les deux réseaux rayonnants afin que ceux-ci n'aient une communication entre eux que devant la paroi fournie par cette plaque centrale dans le passage de conformation du produit extrudé. Chacun de ces réseaux rayonnants, comme représenté dans la figure 5, est constitué par des fentes (12) radiales distribuées à partir du centre de chaque plaque (8, 9) et débouchant dans un canal périphérique (13) pratiqué en retrait du bord extérieur de chaque plaque.

Ces fentes radiales sont pratiquées suivant un pas angulaire identique et constant dans chacune des plaques (8, 9), mais cependant avec un décalage d'un demi-pas d'une plaque à l'autre, comme on le voit au mieux dans la coupe selon la figure 4. On peut voir également dans cette figure 4 que le canal (13) périphérique à chaque plaque (8, 9) est mis en communication respective avec chaque buse (5, 6) correspondante des canalisations (B, C) par l'intermédiaire d'orifices respectifs (B1, B2 et C1, C2) pratiqués dans les bords respectifs supérieur (14) et inférieur (15) des plaques externes d'étanchéité (10, 11) comme on le voit au mieux dans les figures 4 et 6.

On comprend de ce qui précède que, pour chacun des éléments de conformation présents dans le tunnel, les canalisations (B) alimentent en fluide gazeux sous pression les fentes radiales de chaque plaque (9) et que ce fluide, après avoir été utilisé en circulant sur la surface extérieure du produit extrudé dans le passage de conformation, est aspiré dans les fentes radiales de chaque plaque (8) par les canalisations d'aspiration (C). Par ailleurs, étant donné que ces éléments sont placés dans le tunnel de façon que la face externe de chaque plaque d'étanchéité (11) de la plaque (9) sort disposée du côté entrée du tunnel, ou côté de la tête d'extrusion, chaque plaque d'étanchéité (10) de la plaque (8) étant, de ce fait, située du côté de la sortie du tunnel, la circulation du fluide gazeux dans le passage de conformation de chaque élément se fait dans le même sens que celui du déplacement du produit extrudé en fournissant à celui-ci une sorte d'aide d'entraînement vers la sortie du tunnel par suite de la formation d'une lame de fluide gazeux superficielle sur l'extérieur du produit dans le passage qui diminue le frottement dans celui-ci et occasionne une sorte de lissage externe de ce produit, d'autant plus que les fentes radiales étant décalées d'une plaque (9) à l'autre plaque (8) procurent une circulation de fluide gazeux froid en épi intéressant de ce fart toute la surface externe du produit entre deux fentes d'aspiration.

A noter, à titre documentaire, que les fentes radiales de distribution de fluide gazeux, c'est-à-dire dans la plaque (9) ont, de préférence, une largeur de 300 microns, alors que celles d'aspiration dans la plaque (8) ont, de préférence, une largeur variant de 50 à 300 microns. Par ailleurs, dans ce mode de réalisation d'élément de conformation et à titre indicatif, la plaque centrale (7) est fabriquée en acier doux, les plaques à réseau rayonnant (8, 9) sont en bronze et les plaques externes d'étanchéité (10, 11) sont en aluminium.

Par ailleurs, en ce qui concerne la pose de ces éléments de conformation dans le tunnel, on se reportera maintenant plus particulièrement aux figures 1 et 7. En effet, comme on le voit dans la figure 1, le tunnel de conformation, pouvant être mis en ligne et à hauteur de la tête d'extrusion (T) au moyen d'une table élévatrice déplaçable (non représentée) est pourvu d'un dispositif de chargement et de positionnement (16) des éléments de conformation dans le tunnel après que chacun de ceux-ci, prévus coupés en deux ou en quatre parties quadrangulaires (comme indiqué par les lignes I-I, II-II dans la figure 6) ait été monté en une seule pièce, autour du produit sortant à l'état pâteux de la filière de la tête d'extrusion (T), dans le berceau de support (17) mobile du dispositif (16), ce berceau pouvant être déplacé en direction de la tête (T) et en direction de l'entrée du tunnel au moyen de crémaillères (18). Ce berceau est conçu de manière à accepter chaque élément de conformation assemblé et à le maintenir en position verticale et décalée vers l'entrée du tunnel au moyen de broches ou d'aimants latéraux (19), pivotants et à méplat, adaptés pour être engagés dans les gorges latérales (20) prévues dans chaque élément et destinées à permettre l'engagement des broches d'immobilisation dans le tunnel en coopération avec les gorges verticales (4) internes des parois latérales de celui-ci. A noter que ces broches ou aimants (19) sont commandés en pivotement par des doigts (21) pour être mis en action au montage d'un élément de conformation dans le berceau de support (17) et hors d'action lorsque ce berceau a poussé cet élément en engagement partiel dans l'entrée du tunnel, comme on le voit au mieux dans la figure 7. En effet, comme on peut le remarquer dans cette figure, un premier élément (E1), engagé partiellement initialement, a été poussé par un second élément (E2) qui est engagé partiellement par le berceau de support (17) dont l'aimant (19) est dégagé de la gorge latérale (20) de l'élément et présente son méplat (22) en parallèle avec le bord latéral de ce dernier. A noter en outre que, comme on le voit dans la figure 7, chaque broche d'immobilisation (23) d'élément de conformation dans le tunnel reste en position dégagée de la gorge latérale de l'élément avec son méplat (24) en parallèle à la paroi intérieure du tunnel tout le temps du chargement du nombre demandé de ces éléments dans le tunnel pour obtenir une conformation adéquate du produit extrudé. Par ailleurs, comme représenté dans la figure 1, pour faciliter le transport d'un élément de conformation assemblé dans le berceau (17) de support mobile, celui-ci est pourvu d'un couvercle (25) articulé sur un côté latéral et verrouillé à la demande sur l'autre côté latéral du berceau.

On peut remarquer que, dans la figure 7, le premier élément (E1), engagé et poussé par le second élément (E2) partiellement engagé, repousse le cadre (c) qui le précède et, de ce fait, tous les autres cadres de bouchage des orifices d'introduction et d'aspiration du fluide gazeux utilisé dont le tunnel est rempli complètement initialement avant de débuter l'opération de conformation, c'est-à-dire l'introduction des éléments de conformation dans le tunnel.

A noter qu'il est sous entendu que, s'il n'est pas nécessaire de remplir le tunnel complètement en éléments de conformation pour obtenir une conformation convenable, les buses (5, 6) des canalisations respectives (B, C) non utilisées restent bouchées par les cadres (c) non dégagés de ce tunnel sous la poussée des éléments introduits dans ce dernier.

Par ailleurs, pour permettre le rapprochement du tunnel chargé de ses éléments de conformation jusqu'à toucher la tête d'extrusion (T), le berceau (17) de support mobile, ainsi que ses crémaillères (18) de déplacement, sont adaptés pour s'escamoter, de préférence vers le bas. Ceci, pour ne pas gêner la mise en position du tunnel à proximité immédiate de la sortie de filière de la tête d'extrusion afin que le produit en cours d'extrusion n'art pas tendance à s'incurver par son poids propre avant sa prise en charge par le premier élément de conformation de l'entrée du tunnel.

## Revendications

1.- Dispositif de conformation situé en sortie d'extrudeuse et adapté pour faire subir au produit extrudé linéairement une opération de refroidissement en continu ou de vulcanisation à chaud pendant sa conformation dans le passage calibré d'éléments de conformation sous forme de plaques disposées verticalement et accolées les unes aux autres, chaque élément étant adapté, d'une part pour admettre, du côté entrée du dispositif, l'introduction d'un courant de fluide et diriger celui-ci sur la surface extérieure du produit extrudé glissant en direction de la sortie dans le passage calibré et, d'autre part, pour évacuer, par aspiration du côté sortie, le fluide utilisé après qu'il ait formé, dans le passage, tout autour du produit, une pellicule de fluide s'écoulant, comme ce dernier, en direction de la sortie du dispositif, lequel est caractérisé par le fait qu'il est constitué sous forme d'un tunnel (1) dont l'enveloppe extérieure loge, dans son évidement longitudinal, les éléments de conformation et incorpore des canalisations internes (A) ne débouchant pas dans son évidement et circulant un liquide ou fluide à température déterminée en fonction de l'opération choisie de refroidissement ou de vulcanisation, des canalisations (B) de distribution, au moyen de buses (5), de fluide gazeux sous pression, à température déterminée suivant ladite opération choisie, dans un premier réseau rayonnant (9) autour du passage calibré et du côté entrée de chacun des éléments de conformation, et des canalisations internes (C) d'aspiration, au moyen de buses (6), du fluide gazeux utilisé, depuis un second réseau rayonnant (8) autour du passage calibré et du côté sortie de chaque élément de conformation considéré, ces canalisations (A, B, C), internes à l'enveloppe du tunnel, n'ayant aucune liaison entre elles mais étant disposées longitudinalement à cette enveloppe dans les parties haute et basse de celle-ci et distribuées parallèlement entre elles, les parties latérales de cette enveloppe comportant seulement des canalisations internes (A) circulant un liquide ou fluide à température déterminée et ne débouchant pas dans l'évidement de cette enveloppe.

2. - Dispositif ce conformation selon la revendication 1, caractérisé par le fait que chaque élément de conformation est sous forme d'une plaque stratifiée monobloc constituée, avant que l'on pratique la découpe du passage central de conformation, d'une plaque centrale (7) pleine, encadrée sur chacune de ses deux faces par une plaque (8, 9) comportant un réseau rayonnant de circulation de fluide gazeux sous forme de fentes radiales (12) prenant naissance au centre de cette plaque et débouchant dans un canal périphérique (13) prévu en retrait du bord extérieur de cette plaque et communiquant pour l'une (9) des plaques aux canalisations (B) de distribution de fluide gazeux sous pression et, pour l'autre plaque (8), aux canalisations (C) d'aspiration, chacune de ces deux plaques à réseau rayonnant ayant, plaquée sur sa face extérieure, une plaque d'étanchéité (10, 11) des fentes radiales de son réseau rayonnant et de son canal périphérique, chaque élément de conformation, après que l'on ait pratiqué la découpe du passage calibré, étant adapté pour que, lors de sa mise en place dans l'évidement de l'enveloppe du tunnel, il soit orienté avec sa plaque (9), à réseau rayonnant de distribution de fluide gazeux, située du côté entrée du tunnel.

3.- Dispositif de conformation selon la revendication 2, caractérisé par le fait que chaque plaque d'étanchéité (10, 11) comporte, pratiqués dans ses bords supérieur (14) et inférieur (15), plusieurs orifices (B1, C1 - B2, C2) mettant en communication le canal périphérique (13) de la plaque à réseau, sur laquelle elle est plaquée, avec les buses (5, 6) de liaison aux canalisations (B, C) correspondantes internes à l'enveloppe.

4.- Dispositif de conformation selon la revendication 2, caractérisé par le fait que les fentes radiales (12) des deux plaques (8, 9) à réseau rayonnant de circulation de fluide gazeux sont distribuées suivant un pas angulaire identique et constant, mais toutefois avec un décallage d'un demi-pas d'une plaque à l'autre, afin que le fluide gazeux pénétrant dans les fentes de la plaque (9) de distribution ait une circulation en épi, en traversant le passage calibré dans la plaque centrale (7), en direction des fentes d'aspiration de fluide gazeux utilisé de l'autre plaque (8), cette circulation en épi, sous forme de lames de fluide, se produisant dans le même sens que celui du défilement du produit extrudé en cours de conformation et sur toute la surface extérieure de ce dernier.

5.- Dispositif de conformation selon l'une quelconque des revendications 1 à 4, caractérisé par le fait que la plaque centrale (7) de chaque élément de conformation formant plaque d'étanchéité entre les deux plaques à réseau rayonnant, est constituée de préférence en acier doux, les deux plaques (8, 9) à réseau rayonnant sont constituées en bronze, en laiton ou en matière plastique dure telle que, par exemple, du Delrin®, et les deux plaques extérieures d'étanchéité sont constituées en aluminium, de préférence du type AU4G.

6.- Dispositif de conformation selon l'une quelconque des revendications 1 à 5, caractérisé par le fait que chaque élément de conformation, sous forme de plaque stratifiée, est prévu, après avoir pratiqué le passage de conformation calibré dans sa partie centrale (figure 6), découpé au moins par moitié en deux parties et, au besoin, quadrangulairement en quatre parties suivant la configuration de la section du produit extrudé afin de permettre l'engagement de chaque partie autour de ce produit en cours d'extrusion à l'état pâteux et de reformer un élément de conformation monobloc enserrant ce produit en cours de défilement.

7.- Dispositif de conformation selon la revendication 1, caractérisé par le fait qu'il est pourvu d'un dispositif de chargement et de positionnement (16), de chacune des plaques stratifiées constituant chaque élément de conformation, à l'intérieur de l'enveloppe, ce dispositif étant constitué par un berceau (17) de support mobile dont la forme correspond à la forme extérieure de chaque élément et qui est adapté pour permettre l'assemblage des parties découpées de chaque élément autour du produit extrudé en phase pâteuse, son déplacement en position assemblée en direction de l'entrée du tunnel située en regard de la filière de sortie de la tête d'extrusion (T) et son engagement partiel dans un plan vertical dans cette entrée, (figure 7) ce berceau étant adapté pour libérer cet élément partiellement engagé lorsqu'il est commandé pour revenir en position initiale en vue de l'assemblage, en lui, de l'élément de conformation suivant, lequel poussera dans le tunnel l'élément précédent lorsqu'il sera à son tour engagé partiellement dans l'entrée du tunnel.

8.- Dispositif de conformation selon la revendication 7, caractérisé par le fait que le berceau (17) de support mobile d'assemblage et d'engagement partiel de chaque élément de conformation dans le tunnel est pourvu latéralement de broches ou d'aimants escamotables (19) adaptés pour agir sur la plaque centrale en acier par l'intermédiaire de gorges (20) pratiquées verticalement dans les bords latéraux correspondants de chaque élément, gorges qui sont également adaptée pour permettre l'introduction de broches (23) à méplat de positionnement et d'immobilisation de chaque élément à l'intérieur du tunnel.

9.- Dispositif de conformation selon la revendication 1, caractérisé par le fait que la partie supérieure de l'enveloppe du tunnel est prévue sous forme d'un couvercle (3), mobile sur articulations, comportant une nappe de canalisations (A) de circulation de liquide ou fluide à ladite température déterminée ainsi que des canalisations (B) d'introduction de fluide gazeux à ladite température déterminée dans chacun des éléments, et des canalisations (C) d'aspiration du fluide gazeux utilisé depuis chacun de ces éléments.

10.- Dispositif de conformation selon la revendication 7, caractérisé par le fait que le berceau (17) de support mobile est pourvu d'une partie de couvercle supérieur (25) articulé sur un côté latéral et verrouillé à la demande sur l'autre côté opposé.

11. - Dispositif de conformation selon la revendication 1, caractérisé par le fait qu'il est monté, avec son berceau (17) mobile de montage et de mise en place des éléments de conformation, sur une table de support mobile et réglable en hauteur et en position dans l'axe de la tête d'extrusion, le berceau mobile (17) étant adapté pour s'escamoter lorsque le tunnel est pourvu du nombre déterminé d'éléments pour obtenir une conformation convenable et pour pouvoir rapprocher ce tunnel jusqu'à toucher la face de sortie de la filière de la tête d'extrusion (T).

12. - Dispositif de conformation selon l'une quelconque des revendications 7 à 11, caractérisé par le fait que le tunnel, avant de commencer la mise en place des éléments de conformation au moyen du dispositif de chargement et de positionnement de ces derniers, est rempli complètement de cadres (c) situés en lieu et place des futurs éléments de conformation et conçus pour boucher les buses (5, 6) de liaison aux canalisation (B, C) correspondantes internes à l'enveloppe, lesquelles buses seront mises en communication avec chaque élément de conformation introduit dans le tunnel et repoussant les cadres précédents en direction de la sortie du tunnel d'où ils se trouvent dégagés un à un au fur et à mesure du remplissage en éléments de conformation.

Fig 1

Fig 2

Fig 5

Fig 6

Fig 3

Fig 4

Fig 7

Office européen
des brevets

# RAPPORT DE RECHERCHE EUROPEENNE

Numero de la demande

EP    92 40 0199

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 668 288 (K.TAKAHASHI) | 1 | B29C47/90 |
| Y | * colonne 10, ligne 22 – ligne 75; figures 1-5 * | 2-12 | B29C47/88 |
| | --- | | |
| Y | US-A-4 288 905 (M. KESSLER) | 2-12 | |
| | * abrégé; figures * | | |
| | --- | | |
| A | DE-A-3 013 020 (WERKZEUGFABRIK STANDARD F. MÜLLER GMBH&CO KG) | 1-3,6 | |
| | * revendications; figures * | | |
| | --- | | |
| A | FR-A-1 544 968 (CHEVRON RESEARCH CO.) | 1 | |
| | * abrégé; figure 2 * | | |
| | --- | | |
| A | EP-A-0 086 623 (V. DE ZEN) | 1 | |
| | * abrégé; figures * | | |
| | --- | | |
| A | FR-A-2 086 713 (PLASTIVAL S.A.) | 1-3,6 | |
| | * revendications; figures * | | |
| | --- | | |
| A | CH-A-512 316 (FARBWERKE HOECHST A.G.) | 1 | |
| | * figure 4 * | | DOMAINES TECHNIQUES RECHERCHES (Int. Cl.5) |
| | --- | | |
| A | GB-A-2 154 500 (UBE-NITTO KASEI CO. LTD) | 1 | B29C |
| | * figure 4 * | | |
| | ----- | | |

Le présent rapport a été établi pour toutes les revendications

| Lieu de la recherche | Date d'achèvement de la recherche | Examinateur |
|---|---|---|
| LA HAYE | 06 MAI 1992 | BELIBEL C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P0402)